Europäisches Patentamt

European Patent Office

Office européen des brevets

(19)

(11) Veröffentlichungsnummer : **0 128 260**
**B1**

(12) # EUROPÄISCHE PATENTSCHRIFT

(45) Veröffentlichungstag der Patentschrift :
**30.07.86**

(21) Anmeldenummer : **84100581.2**

(22) Anmeldetag : **20.01.84**

(51) Int. Cl.⁴ : **B 63 G 8/22**, B 63 G 8/40

(54) **Rettungseinrichtung für Unterwasserfahrzeuge.**

(30) Priorität : 03.06.83 DE 3320159

(43) Veröffentlichungstag der Anmeldung :
19.12.84 Patentblatt 84/51

(45) Bekanntmachung des Hinweises auf die Patenterteilung : 30.07.86 Patentblatt 86/31

(84) Benannte Vertragsstaaten :
FR GB IT

(56) Entgegenhaltungen :
FR-A- 2 229 607
FR-A- 2 395 186

(73) Patentinhaber : ERNO Raumfahrttechnik Gesellschaft
mit beschränkter Haftung
Hünefeldstrasse 1-5
D-2800 Bremen (DE)

(72) Erfinder : Erdmann, Hermann
Theodor-Storm-Strasse 27
D-2803 Weyhe (DE)
Erfinder : Ramaker, Hermann
Dinklager Weg 11
D-2805 Stuhr 2 (DE)

(74) Vertreter : Schramm, Ewald Werner Josef
Messerschmitt-Bölkow-Blohm GmbH Patentabteilung
TW63 (TWB32) Postfach 10 78 45
D-2800 Bremen 1 (DE)

**Beschreibung**

Die Erfindung geht aus von einer Rettungseinrichtung der im Oberbegriff des Anspruches 1 angegebenen und durch die DE-C-23 24 709 bekannt gewordenen Art.

Rettungseinrichtungen dieser Art werden in Unterwasserfahrzeugen mitgeführt und in etwaigen Notsituationen während einer Tauchfahrt in Betrieb genommen, um das in den Tauchzellen des Fahrzeuges enthaltene Wasser auszutreiben und so das Fahrzeug in kürzester Zeit wieder an die Oberfläche zu befördern. In solchen Situationen wird der in einem Vorratsbehälter gespeicherte flüssige Energieträger mittels eines Druckgases möglichst rasch in die mit einem Katalysator gefüllte Reaktionskammer gepreßt, wobei dieses Druckgas, im allgemeinen Stickstoff oder Helium, in entsprechend ausgelegten Hochdrucktanks mitgeführt wird. Um den mit wachsender Tauchtiefe zunehmenden Einfluß des Tiefendrucks auf die Fördereinrichtung in etwa zu kompensieren, ist in der eingangs genannten Schrift vorgeschlagen worden, den Vorratsbehälter für den flüssigen Energieträger dem Druck des umgebenden Wassers auszusetzen und dadurch die Anforderungen an die Fördereinrichtung auch in größeren Tauchtiefen möglichst niedrig zu halten.

Aufgabe der Erfindung ist es demgegenüber, eine derartige Rettungseinrichtung so auszubilden, daß eine Anpassung der Ausblaszeit an die jeweilige Tauchtiefe in dem Sinne möglich wird, daß nicht nur eine möglichst kurze Ausblaszeit über den gesamten Einsatz-Tauchtiefenbereich des Fahrzeuges erreicht wird, sondern daß sogar eine Konstanthaltung der Ausblaszeit mit zunehmender Tauchtiefe ermöglicht wird. Darüber hinaus soll durch die Erfindung eine weitere Reduzierung an Volumen, Gewicht und Kosten einer solchen Rettungseinrichtung erzielt werden.

Zur Lösung dieser Aufgabe sind bei der Erfindung die im kennzeichnenden Teil des Anspruches 1 angegebenen Gestaltungsmerkmale vorgesehen, wobei ferner in den Unteransprüchen vorteilhafte Weiterbildungen, vor allem in Hinblick auf eine weitere Vereinfachung und Erhöhung der Funktionstüchtigkeit der Anordnung, beansprucht werden.

Dadurch, daß bei der erfindungsgemäßen Rettungseinrichtung konstruktionsbedingt der Fördereinrichtung, d. h. in diesem Fall dem zusätzlich vorgesehenen Gaserzeuger, der mit wachsender Tauchtiefe zunehmende Leistungsbedarf für die Bereitstellung des Fördergases unmittelbar aufgeprägt wird, sind eine entsprechend robuste konstruktive Auslegung des Fahrzeuges und der Rettungseinrichtung sowie ein entsprechender Vorrat an flüssigem Energieträger vorausgesetzt, der Funktionsfähigkeit der erfindungsgemäßen Rettungseinrichtung keine definitiven Tauchtiefengrenzen gesetzt. Selbst in der sogenannten Absacktauchtiefe, d. h. derjenigen Tauchtiefe, bei der es bereits zu wachsenden bleibenden plastischen Verformungen des gesamten Druckkörpers des Fahrzeuges kommt, ist die Funktionsfähigkeit der Einrichtung gegeben, sofern nicht bereits schwere Schäden an den Tauchzellen selbst vorliegen.

Eine besonders funktionssichere und dabei konstruktiv einfache Lösung ergibt sich, wenn die Initiierung des zweiten Gaserzeugers, d. h. der Fördereinrichtung unmitelbar, durch den Druck des umgebenden Wassers herbeigeführt wird. In diesem Fall kann das System nicht nur ohne jede Hilfe von Fremdstoffen in Tauchtiefen ab etwa 5 Metern gestartet werden, sondern es ist zugleich bei aufgetauchtem Fahrzeug ein versehentlicher Systemstart ausgeschlossen. Durch die modulare Bauweise der Systemkomponenten schließlich wird ein schnelles Auswechseln der einzelnen Komponenten ermöglicht, wodurch Wartung und Logistik erheblich vereinfacht werden.

Nachfolgend soll die Erfindung anhand von in der Zeichnung dargestellten Ausführungsbeispielen näher erläutert werden. Es zeigen :

Figur 1 eine Rettungseinrichtung in teilweise geschnittener Darstellung,

Figur 2 einen vergrößerten Ausschnitt aus Fig. 1,

Figur 3 eine perspektivische Darstellung eines Ausschnitts aus Fig. 2 und

Figur 4 eine Schnittdarstellung eines zweiten Ausführungsbeispiels.

In den Figuren sind gleiche bzw. entsprechende Bauteile mit den gleichen Bezugzeichen versehen.

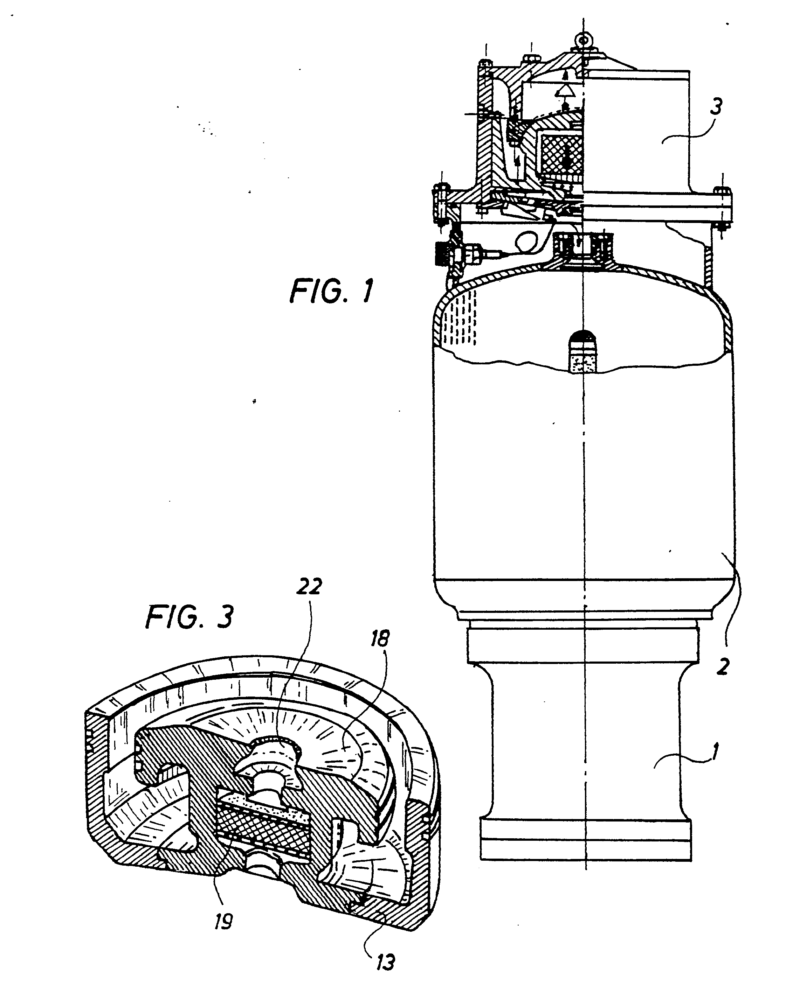

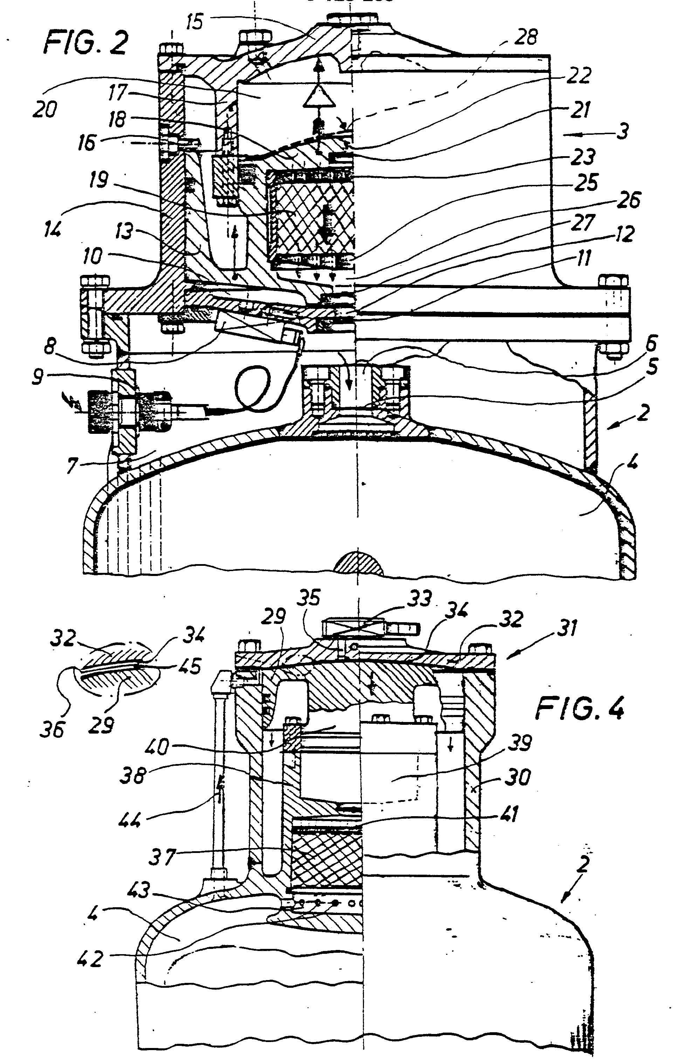

Die in Fig. 1 dargestellte Rettungseinrichtung für ein Unterwasserfahrzeug ist modular aufgebaut und setzt sich im wesentlichen aus drei Komponenten zusammen : einem Gaserzeugermodul 1, einem Speichermodul 2 zur Speicherung des flüssigen Energieträgers, in diesem Fall Hydrazin, sowie einem Fördermodul 3. Der Gaserzeugermodul 1 ist dabei in der aus der eingangs genannten DE-C-23 24 709 bekannten Weise aufgebaut, d. h. er enthält im wesentlichen eine mit einem für die Zersetzung des flüssigen Energieträgers geeigneten Katalysator gefüllte Reaktionskammer mit den zugehörigen Einlaß- und Austrittskomponenten. Auf diesen Teil soll daher hier nicht weiter eingegangen werden. Der Fördermodul 3 sowie der Speichermodul 2 sollen dagegen im folgenden eingehender erläutert werden ; diese sind in Fig. 2 in vergrößertem Maßstab dargestellt.

Ein im Speichermodul 2 angeordneter Vorratsbehälter 4 ist mit flüssigem Energieträger zur Versorgung der im Gaserzeugermodul 1 enthaltenen Reaktionskammer gefüllt. Der Vorratsbehälter ist über einen zunächst von einer Berstscheibe 5 verschlossenen Eingangsstutzen 6 mit einem gasdichten Druckraum 7 verbunden. Letzterer ist im Fall des hier dargestellten Ausführungsbeispiels der Erfindung mit einem vorgespannten Kaltgas, in diesem Fall Stickstoff, gefüllt. Weiterhin ist im Druckraum 7 ein pyrotechnisches Ventil 8 angeordnet, das über eine Stellvorrichtung 9 von außen elektrisch betätigt werden kann. Dieses Ventil 8 verbindet den Druckraum 7 mit einem weiteren Druckraum 10, wobei die beiden Druckräume 7 bzw. 10 ferner durch einen ebenfalls durch eine Berstscheibe 11 verschlossenen Kanal 12 miteinander in Verbindung bringbar sind. Nach oben wird der Druckraum 10 von einem ersten Kolben 13 eines Differenzdruckkolbensystems abgegrenzt, der entlang der Innenwand des Gehäuses 14 des Fördermoduls 3 geführt ist. Dieses Gehäuse 14 ist unmittelbar an den Speichermodul 2 angeflanscht und wird durch einen Domdeckel 15 verschlossen. Der Kolben 13 ist durch einen in die Gehäusewand eingeschraubten Scherstift 16 in seiner Ruhelage arretiert.

Ein innerer Ansatz 17 des Domdeckels 15 bildet die Zylinderwand für einen zweiten Kolben 18, der ebenfalls Teil des Differenzdruckkolbensystems ist. Dabei liegt der Kolben 18, dessen wirksame Querschnittsfläche kleiner als diejenige des Kolbens 13 ist, konzentrisch im letzteren. Im Zentrum des Kolbens 18 wiederum ist in einer Ausnehmung eine weitere Reaktionskammer 19 untergebracht, die wesentlicher Bestandteil eines zweiten Gaserzeugers ist. Dieser zweite Gaserzeuger, im folgenden als Pilot-Gaserzeuger bezeichnet, ist in seinen Abmessungen wesentlich kleiner als der den Gaserzeugermodul bildende erste Gaserzeuger und ist wie dieser ebenfalls mit einem flüssigen Energieträger, im vorliegenden Fall ebenfalls Hydrazin, betreibbar. Der flüssige Energieträger zum Betrieb des Pilot-Gaserzeugers ist dabei im Zylinder 20 des Kolbens 18 gespeichert, der mit der Reaktionskammer 19 über eine mit einer weiteren Berstscheibe 21 versehene Einlaßöffnung 22 sowie eine perforierte Einspritzplatte 23 verbunden ist. Zum Betanken ist der Domdeckel 15 ferner mit einem Einfüllstutzen 24 versehen. Schließlich ist die Reaktionskammer 19 durch eine mit Ausströmöffnungen versehene Abschlußplatte 25 sowie einen im Boden des Differenzdruckkolbensystems befindlichen weiteren Druckraum 26, der ebenfalls· durch eine Berstscheibe 27 verschlossen ist, mit dem Druckraum 10 verbunden. Wie die Abbildung zeigt, ist oberhalb des Kolbens 18 noch eine durchlässige Schermembran 28 angeordnet, ferner sind die beiden Kolben 13 bzw. 18 mit geeigneten Dichtungen versehen. In Fig. 3 ist der vorstehend bereits erläuterte Aufbau des Differenzdruckkolbensystems als einstückiges, integriertes Bauteil noch einmal im Detail in perspektivischer Darstellung wiedergegeben.

Die Wirkungsweise des vorstehend beschriebenen Systems ist nun wie folgt : Vor der Initiierung des Systems ist, wie bereits erwähnt, der Druckraum 7 mit Stickstoff unter einem Druck von etwa 1 bis 2 bar gefüllt. Wird nun über ein elektrisches Stellsignal das Ventil 8 geöffnet, so strömt das expandierende Stickstoffgas in den Druckraum 10 unterhalb des ersten Kolbens 13. Dieser trennt daraufhin den Scherstift 16 ab, der zwangsläufig mitbewegte Kolben 18 durchtrennt die Schermembran 28. Wenn nun, angetrieben durch den Druck des Stickstoffgases, sich die beiden Kolben 13 bzw. 18 weiter nach oben bewegen, so drückt der Kolben 18 das flüssige Hydrazin — nach Zerstören der Berstscheibe 21 — durch die Einspritzplatte 23 in die Reaktionskammer 19 des Pilot-Gaserzeugers. Hier wird das Hydrazin katalytisch in die entsprechende Menge an Fördergas zersetzt. Der Druck des entstehenden Gases zerstört die Berstscheibe 27, und das Gas strömt nun in den bereits mit Stickstoffgas gefüllten Druckraum 10. Dadurch steigt in diesem Raum der Druck weiter an und erzeugt aufgrund der unterschiedlich großen Querschnittsflächen der Kolben 13 und 18 einen entsprechend dem Flächenverhältnis verstärkten Einspritzdruck im Zylinder 20, so daß der Pilot-Gaserzeuger schnell einen hohen Fördergasdruck aufbaut.

Dieser Druck zerstört schließlich die Berstscheibe 11, wodurch auch im Druckraum 7 der Druck rasch ansteigt, so daß als letztes die Berstscheibe 5 ebenfalls zerstört wird und der Vorratsbehälter 4 mit dem flüssigen Energieträger für den Haupt-Gaserzeuger mit dem Förderdruck beaufschlagt wird. Der weitere Ablauf ist nun wie bei den bereits bekannten Systemen, d. h. das Hydrazin wird aus dem Vorratsbehälter 4 in die Reaktionskammer des Gaserzeugermoduls gepreßt, wird dort katalytisch zersetzt und drückt als Gas das in den Tauchzellen des Fahrzeuges enthaltene Wasser aus diesen hinaus.

Das Fördersystem, d. h. der Pilot-Gaserzeuger, erreicht dann einen stabilen Arbeitspunkt, wenn in der Reaktionskammer des Gaserzeugermoduls ein vorgegebener Nenndurchsatz an Hydrazin bei einem vorgegebenen Ausblasdruck, der größer sein muß als der jeweils herrschende Wasserdruck, erreicht wird. Zum Erreichen dieses Betriebspunktes ist im Vorratsbehälter 4 ein bestimmter Volumenstrom bei einem bestimmten Förderdruck $P_T$ erforderlich. Dieser sich einstellende Förderdruck $P_T$ wirkt seinerseits zurück auf den Druckraum 10 und damit auf die Fläche des Kolbens 13. Wird dieser Arbeitspunkt kurzzeitig in der instabilen Anlaufphase überlaufen, so wirkt sich das zunächst so aus, daß sich der Einspritzdruck in die Reaktionskammer 19 des Pilot-Gaserzeugers erhöht. Da hier jedoch bereits ein Kammerdruck $P_c$ herrscht, der höher ist als der Druck $P_T$ im Vorratsbehälter 4, ist das Druckgefälle geringer als es sich allein aufgrund der unterschiedlichen Kolbenflächen ergeben würde. Die Einspritzmenge im Pilot-Gaserzeuger nimmt deshalb wieder ab, und es stellt sich erneut ein stabiler Arbeitspunkt ein. Die analoge Betrachtung gilt umgekehrt auch für einen Abfall des Förderdrucks im Vorratsbehälter 4. Der Betriebsdruck $P_c$ in der Reaktionskammer 19 des Pilot-Gaserzeugers strebt daher stets wieder einem Gleichgewichtswert zu, der sich einerseits aufgrund des herrschenden Wasserdrucks und des somit notwendigen Förderdrucks ergibt und der andererseits von den gewählten Größen der jeweiligen Ein- und Austrittsquerschnitte sowie der wirksamen Kolbenflächen abhängt. Das Differenzdruckkolbensystem bildet so zusammen mit dem System der einzelnen Druckräume und Kanäle eine Rückkopplungs- und Verstärkungseinrichtung für den Pilot-Gaserzeuger, die diesem über den gesamten vorgesehenen Einsatz-Tauchtiefenbereich eine unterkritische Betriebscharakteristik verleiht.

Das in Fig. 4 gezeigte zweite Ausführungsbeispiel der erfindungsgemäßen Rettungseinrichtung unterscheidet sich vom vorstehend beschriebenen im wesentlichen dadurch, daß hier zur Initiierung des Pilot-Gaserzeugers ausschließlich der herrschende Tauchtiefendruck verwendet wird.

Bei dieser Anordnung ist eine Kolben 29 des Differendruckkolbensystems so in der Gehäusewand 30 des Fördermoduls 31 geführt, daß er unmittelbar durch das eindringende Seewasser beaufschlagbar ist. Am Domdeckel 32 ist zu diesem Zweck ein pyrotechnisches Ventil 33 angeordnet, das den Außenraum mit dem Raum 34 zwischen dem Kolben 29 und dem Domdeckel 32 über eine Einlaßöffnung 35 verbindet. Der Kolben 29 ist dabei durch eine wasserundruchlässige dauerelastische Membran 36 gegen den Raum 34 abgegrenzt. Im Fall dieses Ausführungsbeispiels ist die Reaktionskammer 37 des Pilot-Gaserzeugers in einem fest mit dem Speichermodul 2 verbundenen Ansatz 38 angeordnet, der zugleich den Zylinder 39 für den zweiten Kolben 40 des Differenzdruckkolbensystems bildet. In letzterem Zylinder 39 ist wieder der flüssige Energieträger für den Betrieb des Pilot-Gaserzeugers untergebracht. Der Reaktionskammer sind, analog zum ersten Ausführungsbeispiel, eine Einspritzplatte 41 sowie eine mit Austrittsöffnungen 42 versehene Bodenplatte 43 zugeordnet. Schließlich ist eine Rückkopplungsleitung 44 vorgesehen, die den Vorratsbehälter 4 für den flüssigen Energieträger des Gaserzeugermoduls 1 mit einem Druckraum 45 verbindet, der sich zwischen der Membran 36 und dem Kolben 29 befindet.

Die Wirkungsweise dieser Anordnung ist wie folgt : Zunächst wird das Ventil 33 elektrisch gezündet und gibt damit den Weg für das in der Tauchzelle befindliche Wasser in den Druckraum 34 frei ; die Membran 36 liegt dabei eng am Kolben 29 an. Unter dem Druck des eingedrungenen Wassers bewegt sich das Differenzdruckkolbensystem in Richtung auf die Reaktionskammer 37 und preßt dabei Hydrazin aus dem Zylinder 39 in die mit dem Katalysator gefüllte Reaktionskammer 37, wodurch der Pilot-Gaserzeuger gestartet wird. Das durch die katalytische Zersetzung freiwerdende Fördergas strömt durch die Austrittsöffnungen 42 in den Vorratsbehälter 4 des Speichermoduls 3. Gleichzeitig strömt das Fördergas über die Rückkopplungsleitung 44 in den Druckraum 45 zwischen der Membran 36 und dem Kolben 29. Aufgrund der verstärkenden Wirkung des Differenzdrucks auf den Kolben 29 läuft das System bis zu seinem durch die Dimensionierung und den Wassertiefendruck vorgegebenen Arbeitsdruck hoch, wobei sich mit steigendem Förderdruck die Membran 36 wieder von innen an den Domdeckel 32 anlegt und das eingedrungene Wasser aus dem Druckraum 34 verdrängt wird. Der weitere Funktionsablauf ist nunmehr wie der anhand der Fig. 1 bis 3 beschriebene, d. h. vom Vorratsbehälter 4 strömt das Hydrazin zur Reaktionskammer des Gaserzeugermoduls 1, dessen Zersetzungsgas das Wasser aus den Tauchzellen drückt.

Eine zusätzliche Möglichkeit, den Pilot-Gaserzeuger sowohl im ersten als auch im zweiten beschriebenen Ausführungsbeispiel zu starten, besteht schließlich noch darin, eine von außen initiierbare Feststoffpatrone oder Gaskartusche so anzuordnen, daß die damit erzeugten Gase auf den querschnittsmäßig größeren der beiden Kolben des Differenzdruckkolbensystems wirken und den vorstehend beschriebenen Funktionsablauf in Gang setzen.

**Patentansprüche**

1. Rettungseinrichtung für Unterwasserfahrzeuge in Form einer Gaserzeugungsanlage, in der durch chemische Reaktion und/oder katalytische Zersetzung eines flüssigen Energieträgers Gase erzeugt werden, die den notwendigen zusätzlichen statischen Auftrieb bewirken, wobei der flüssige Energieträger durch den Druck eines Fördergases aus einem Vorratsbehälter in eine Reaktionskammer eines ersten Gaserzeugers (1) gepreßt wird, dadurch gekennzeichnet, daß zur Erzeugung des Fördergases ein dem ersten vorgeschalteter zweiter Gaserzeuger (19, 20, 37, 39) sowie eine diesem zugeordnete Rückkopplungs- und Verstärkungseinrichtung vorgesehen sind, deren Eingangsseite (13, 29) vom Druck des erzeugten Fördergases beaufschlagbar und deren Ausgangsseite (18, 40) als Regelorgan für den zweiten Gaserzeuger (19, 20, 37, 39) ausgebildet ist.

2. Rettungseinrichtung nach Anspruch 1, dadurch gekennzeichnet, daß die Betriebscharakteristik der Rückkopplungs- und Verstärkungseinrichtung auf einen derart unterkritischen Kopplungsgrad im vorgesehenen Einsatz-Tauchtiefenbereich eingestellt ist, daß sich der Tankdruck zur Erzielung einer konstanten, von der Tauchtiefe unabhängigen Ausblaszeit der Tauchzellen automatisch an die jeweilige Tauchtiefe anpaßt.

3. Rettungseinrichtung nach Anspruch 1 oder 2, dadurch gekennzeichnet, daß der zweite Gaserzeuger (19, 20, 37, 39) ebenfalls auf der Basis der chemischen Reaktionen und/oder katalytischen Zersetzung flüssiger Energieträger betreibbar ist.

4. Rettungseinrichtung nach Anspruch 3, dadurch gekennzeichnet, daß die Rückkopplungs- und Verstärkungseinrichtung ein Differenzdruckkolbensystem aufweist, dessen Kolben (13, 18, 29, 40) jeweils mit dem Vorratsbehälter (4, 20, 39) für den flüssigen Energieträger in Druckverbindung stehen, wobei der dem Vorratsbehälter (20, 39) für den flüssigen Energieträger des zweiten Gaserzeugers zugeordnete Kolben (18, 40) die kleinere wirksame Querschnittsfläche von beiden aufweist.

5. Rettungseinrichtung nach Anspruch 4, dadurch gekennzeichnet, daß die beiden Kolben (13, 18 bzw. 29, 40) konzentrisch ineinander liegend angeordnet und einstückig miteinander verbunden sind.

6. Rettungseinrichtung nach Anspruch 5, dadurch gekennzeichnet, daß der zweite Gaserzeuger im inneren Kolben (13, 40) des Differenzdruckkolbensystems integriert angeordnet ist.

7. Rettungseinrichtung nach einem der Ansprüche 4 bis 6, dadurch gekennzeichnet, daß zur Initiierung des zweiten Gaserzeugers der flächenmäßig größere der beiden Kolben (13, 29) mit einem vorgespannten Kaltgas beaufschlagbar ist.

8. Rettungseinrichtung nach einem der Ansprüche 4 bis 6, dadurch gekennzeichnet, daß zur Initiierung des zweiten Gaserzeugers der flächenmäßig größere der beiden Kolben (13, 29) unmittelbar vom Umgebungs-Wasserdruck beaufschlagbar ist.

9. Rettungseinrichtung nach einem der Ansprüche 1 bis 8, dadurch gekennzeichnet, daß die aus dem zweiten Gaserzeuger sowie der diesem zugeordneten Rückkopplungs- und Verstärkungseinrichtung bestehende Fördereinheit (3) modulförmig aufgebaut ist.

## Claims

1. An emergency device for submerged craft in the form of a gas generating installation in which gases are produced by chemical reaction and/or catalytic decomposition of a liquid energy carrier, which gases cause the necessary additional static buoyancy, the liquid energy carrier being forced out of a storage tank into a reaction chamber of a gas generator by the pressure of a conveying gas, characterised in that, in order to produce the conveying gas, there are provided a second gas generator (19, 20, 37, 39) as well as a feedback and amplification device associated therewith, the input side (13, 29) of which can be acted upon by the conveying gas produced and the output side (18, 40) of which is constructed in the form of a control member for the second gas generator (19, 20, 37, 39).

2. An emergency device as claimed in Claim 1, characterised in that the operating characteristic of the feedback and amplification device is adjusted to such a subcritical coupling factor in the intended range of operating immersion depths that the tank pressure is automatically adapted to the particular depth of immersion in order to achieve a constant blow-out time of the diving cells, independent of the depth of immersion.

3. An emergency device as claimed in Claim 1 or 2, characterised in that the second gas generator (19, 20, 37, 39) can likewise be operated on the basis of chemical reactions and/or catalytic decomposition of liquid energy carriers.

4. An emergency device as claimed in Claim 3, characterised in that the feedback and amplification device comprises a differential-pressure piston system, the pistons (13, 18, 29, 40) of which are each in pressure communication with the storage tank (4, 20, 39) for the liquid energy carrier, the piston (18, 40) associated with the storage tank (20, 39) for the liquid energy carrier of the second gas generator having the smaller effective cross-sectional area of the two.

5. An emergency device as claimed in Claim 4, characterised in that the two pistons (13, 18 or 29, 40) are disposed lying concentrically one inside the other and are made integral with one another.

6. An emergency device as claimed in Claim 5, characterised in that the second gas generator is disposed integrated in the inner piston (13, 40) of the differential-pressure piston system.

7. An emergency device as claimed in any of Claims 4 to 6, characterised in that, in order to initiate the second gas generator, the larger in area of the two pistons (13, 29) can be acted upon by a pressurized cold gas.

8. An emergency device as claimed in any of Claims 4 to 6, characterised in that in order to initiate the second gas generator, the larger in area of the two pistons (13, 29) can be acted upon directly by the surrounding water pressure.

9. An emergency device as claimed in any of Claims 1 to 8, characterised in that the conveying unit (3) consisting of the second gas generator as well as the feedback and amplification device associated therewith is constructed in module form.

## Revendications

1. Dispositif de secours pour engins sousmarins, sous la forme d'une installation générant un gaz dans laquelle, par réaction chimique et/ou décomposition catalytique d'un porteur d'énergie, liquide, on génère des gaz qui créent la poussée statique complémentaire, nécessaire pour la montée, le support d'énergie liquide étant expulsé par la pression d'un gaz vecteur hors du réservoir d'alimentation dans une chambre de réaction d'un générateur de gaz, dispositif caractérisé en ce que, pour générer le gaz vecteur, il est prévu un second générateur de gaz (19, 20, 37, 39) ainsi qu'une installation de réaction et d'amplification associée à celui-ci et dont l'entrée (13, 29) reçoit la pression du gaz vecteur, généré et dont la sortie (18, 40) est réalisée comme organe de réglage du second générateur de gaz (19, 20, 37, 39).

2. Dispositif de secours selon la revendication 1, caractérisé en ce que la caractéristique de fonctionnement du dispositif de réaction et d'amplification est réglée sur un degré de couplage sous-critique tel que, dans la zone de profondeur de plongée de mise en œuvre prévue,

la pression du réservoir soit adaptée à la profondeur de plongée correspondante pour obtenir un temps d'expulsion constant indépendant de la profondeur de plongée pour les cellules de plongée, automatiquement adaptées à la profondeur de plongée correspondante.

3. Dispositif de secours selon les revendications 1 ou 2, caractérisé en ce que le second générateur de gaz (19, 20, 37, 39) est également susceptible de fonctionner suivant des réactions chimiques et/ou une décomposition catalytique d'un support d'énergie liquide.

4. Dispositif de secours selon la revendication 3, caractérisé en ce que le dispositif de réaction et d'amplification comporte un système à pistons différentiels de pression dont les pistons (13, 18, 29, 40) sont chaque fois reliés au réservoir d'alimentation (4, 20, 39) du support d'énergie liquide, et le piston (18, 40) associé au réservoir d'alimentation (20, 39) du support d'énergie liquide du second générateur de gaz présente la plus petite section efficace des deux.

5. Dispositif de secours selon la revendication 4, caractérisé en ce que les deux pistons (13, 18 ou 29, 40) sont concentriques l'un par rapport à l'autre et sont reliés pour former une seule pièce.

6. Dispositif de secours selon la revendication 5, caractérisé en ce que le second générateur de gaz est intégré dans le piston intérieur (13, 40) du système à pistons à pression différentielle.

7. Dispositif de secours selon l'une des revendications 4 à 6, caractérisé en ce que pour initialiser le second générateur de gaz de celui des deux pistons (13, 29) ayant la plus grande surface, on le soumet à un gaz froid précontraint.

8. Dispositif de secours selon l'une des revendications 4 à 6, caractérisé en ce que, pour initialiser le second générateur de gaz, on soumet celui des deux pistons (13, 29) de plus grande surface, directement par la pression de l'eau environnante.

9. Dispositif de secours selon l'une des revendications 1 à 8, caractérisé en ce que l'unité de transfert (3) composée du second générateur de gaz ainsi que du dispositif de réaction et d'amplification associé à celui-ci présente une structure modulaire.

FIG. 1

FIG. 3

0 128 260

FIG. 2

FIG. 4

2